# EUROPÄISCHE PATENTSCHRIFT

(11) **EP 3 951 147 B1**
(45) Veröffentlichungstag und Bekanntmachung des Hinweises auf die Patenterteilung: **27.11.2024**
(21) Anmeldenummer: 21198824.1
(22) Anmeldetag: 23.02.2017
(51) Int. Cl.: F02B 41/10, F02B 67/04

(54) **NEBENTRIEB EINER BRENNKRAFTMASCHINE**
ACCESSORY DRIVE OF A COMBUSTION ENGINE
ENTRAÎNEMENT AUXILIAIRE POUR UN MOTEUR À COMBUSTION INTERNE

(30) Priorität: 22.03.2016 AT 1522016
(43) Veröffentlichungstag der Anmeldung: 09.02.2022
(62) Teilanmeldung aus: 17157663.0
(73) Patentinhaber: MAN Truck & Bus SE, 80995 München (DE)
(72) Erfinder: Raab, Gottfried, 4320 Perg (AT); Klammer, Josef, 4400 Steyr (AT); Hundsberger, Ewald, 4421 Aschach / Steyr (AT)
(74) Vertreter: v. Bezold & Partner Patentanwälte - PartG mbB

(56) Entgegenhaltungen:
- DE-B- 1 027 941
- DE-B3- 102013 000 495
- DE-C1- 4 429 855
- GB-A- 206 845
- GB-A- 644 096
- GB-A- 737 159
- GB-A- 824 783
- US-A- 2 197 179
- US-A- 2 912 963
- US-A- 3 272 188
- US-A1- 2002 012 593

## Beschreibung

Die Erfindung betrifft einen Nebentrieb einer Brennkraftmaschine, insbesondere einer Brennkraftmaschine eines Nutzfahrzeugs.

Brennkraftmaschinen von Nutzfahrzeugen weisen vielfach einen Nebenabtrieb auf, der dem Antrieb von Geräten oder Nebenaggregaten dient. Zu diesem Zweck ist es bekannt, dass man von einer Kurbelwelle der Brennkraftmaschine ausgehend über Zwischenräder eine Welle des Nebentriebes antreibt. Aus der Offenlegungsschrift EP 1 174 605 A2 ist beispielsweise ein Nebentrieb einer Brennkraftmaschine bekannt, bestehend aus einer Welle, welche mittels Radial- und Axiallagern in einem Gehäuse geführt ist und welche drehfest mit einem Zahnrad verbunden ist, wobei dieses Zahnrad von einer Kurbelwelle der Brennkraftmaschine ausgehend über Zwischenräder antreibbar ist und die Welle an ihrem freien Ende zum Antrieb von Arbeitsmaschinen einen mit der Welle drehfest verbundenen Abtriebsflansch aufweist. Hierbei ist die Welle mit den Radial- und Axiallagern und dem Zahnrad ins Kurbelgehäuse der Brennkraftmaschine integriert, wobei das Zahnrad unmittelbar zwischen den Radiallagern liegend angeordnet ist. Dazu offenbaren GB 206 845 A und US 2 197 179 A Nebenaggregatanordnungen, die für Kraftturbinenkupplungen an der Kurbelwelle relevant sind.

Ferner ist bekannt, dass moderne Brennkraftmaschinen zahlreiche Nebenaggregate aufweisen. Neben solchen Nebenaggregaten, die unmittelbar für den Betrieb des Fahrzeugmotors erforderlich sind, wie z. B. Lichtmaschine, Wasserpumpe oder Kompressor, werden zunehmend solche Nebenaggregate eingesetzt, die den Komfort des Fahrzeugs verbessern sollen, z. B. Klimakompressoren, Lenkhilfepumpen usw. Üblicherweise werden diese Nebenaggregate am Fahrzeugmotor befestigt und werden von diesem über Kettentriebe, Riementriebe, Zahnradtriebe oder einer Kombination davon angetrieben. Je mehr Nebenaggregate in einem Fahrzeug vorgesehen sind, desto schwieriger wird es räumlich, diese in geeigneter Weise am Fahrzeugmotor zu befestigen, und desto aufwändiger und komplizierter werden die erforderlichen Triebe. Eine solche Vielzahl von Nebenaggregaten und Riementrieben o. Ä. bereitet nicht nur wegen des heutzutage im Allgemeinen sehr knapp bemessenen Motorraums Schwierigkeiten.

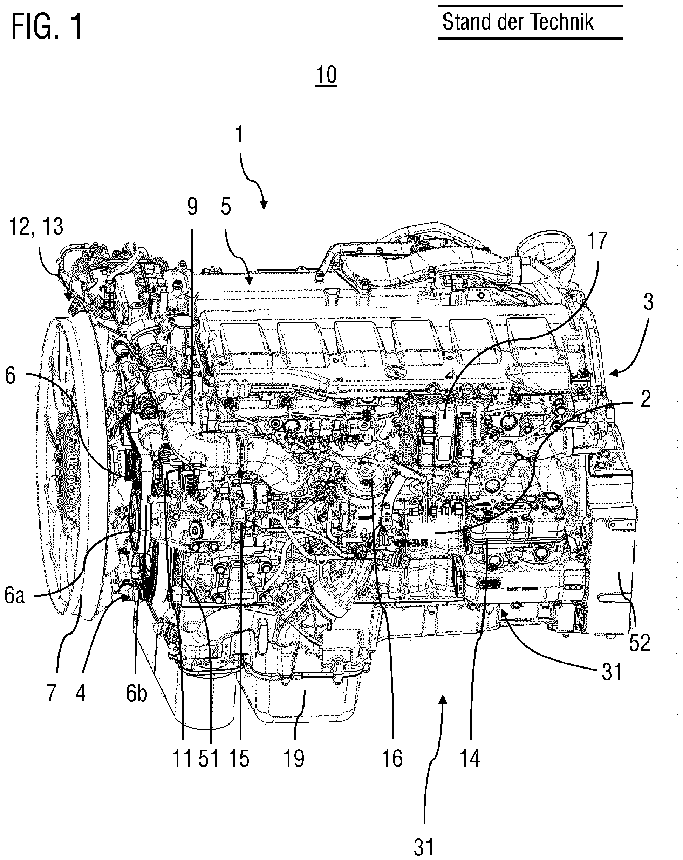

In Figur 1 ist eine perspektivische Ansicht einer aus dem Stand der Technik bekannten Anordnung 10 von Nebenaggregaten eines Verbrennungsmotors gezeigt. Hierbei handelt es sich um einen als Dieselbrennkraftmaschine ausgeführten Verbrennungsmotor 1 eines Nutzfahrzeugs. Der Verbrennungsmotor 1 ist unten mit einer Ölwanne 19 abgeschlossen. Die Oberseite des Verbrennungsmotors 1 ist mit dem Bezugszeichen 5 bezeichnet. An der vorderen Stirnseite 4 des Verbrennungsmotors 1 befindet sich ein von der Brennkraftmaschine angetriebenes Riemengetriebe 6, nachfolgend kurz als Riementrieb bezeichnet. In der perspektivischen Ansicht der Figur 1 ist mit dem Bezugszeichen 6b der Riemen und mit dem Bezugszeichen 6a eine Antriebsriemenscheibe bezeichnet. Der Riementrieb treibt in an sich bekannter Weise einen 24V-Generator (Lichtmaschine) 11, eine Wasserpumpe 12 und einen Kältemittelkompressor 13 der Klimaanlage an. Wasserpumpe 12 und Kältemittelkompressor 13 sind ebenfalls hinter dem Lüfter 7 an der vorderen Stirnseite 4 angeordnet, jedoch auf dem in Figur 1 nicht gezeigten hinteren Teil der vorderen Stirnseite 4 und somit auf der dem Generator 11 gegenüberliebenden Seite der vorderen Stirnseite 4.

An der vorderen Stirnseite 4 befindet sich ferner ein von der Brennkraftmaschine angetriebener vorderer Rädertrieb (Zahnradgetriebe), dessen Zahnräder von dem Steuergehäuse 51 umhaust sind und somit in der Darstellung der Figur 1 nicht erkennbar sind. Der vordere Rädertrieb treibt den an der vorderen Stirnseite 4 angeordneten Lüfter 7, eine seitlich am Kurbelgehäuse 2 angeordnete Kraftstoff-Hochdruckpumpe 15 sowie eine Ölpumpe an. Ferner ist ein hinterer Rädertrieb vorhanden, d. h. ein an der getriebeseitigen Stirnseite 3 des Verbrennungsmotors 1 angeordneter Rädertrieb, der von der Brennkraftmaschine 1 angetrieben wird. Der hintere Rädertrieb ist von dem Steuergehäuse 52 umhaust und daher in der Darstellung der Figur 1 nicht sichtbar. Das Kurbelgehäuse 2 ist zu den Stirnseiten 3, 4 hin offen und wird stirnseitig von den Steuergehäusen 51, 52, in denen die Rädertriebe untergebracht sind, abgeschlossen.

Der hintere Rädertrieb treibt einen Luftverdichter 14, auch als Luftpresser bezeichnet, an, der als Kolbenverdichter ausgeführt ist. Der Luftverdichter 14 versorgt ein Druckluftsystem des Nutzfahrzeugs mit Druckluft. Der Luftverdichter ist an einem unteren hinteren Abschnitt der seitlichen Wandung des Kurbelgehäuses befestigt. An dieser Stelle befindet sich eine Öffnung im Kurbelgehäuse 2, über die der Leistungsfluss zwischen Druckluftverdichter 4 und dem hinteren Rädertrieb erfolgt.

Der hintere Rädertrieb treibt ferner eine Lenkhilfepumpe an, die am Luftverdichter 14 angeordnet ist. Der hintere Räderabtrieb treibt ferner in bekannter Weise den Nockenwellenantrieb an und weist einen Nebentrieb (engl. Power Take-off) auf, zum Antrieb von z. B. einer Hydraulikpumpe für Aufbauten des Nutzfahrzeugs (jeweils nicht dargestellt).

Durch eine derartige Ausgestaltung wird der verfügbare freie Bauraum nahezu vollständig zur Anordnung solcher Nebenaggregate genutzt, die für konventionell ausgestattete Kraftfahrzeuge notwendig sind. Probleme ergeben sich jedoch bei einer Ausrüstung mit weiteren Nebenaggregaten, beispielsweise falls das Nutzfahrzeug mit einem System zur Abwärmenutzung (engl. Waste Heat Recovery (WHR)) ausgestattet werden soll, bei dem z. B. eine Expansionsmaschine zum Einsatz kommen soll.

Vor diesem Hintergrund liegt der Erfindung die Aufgabe zugrunde, eine Möglichkeit zur Anordnung von Nebenaggregaten bei einer Brennkraftmaschine bereitzustellen, mit der Nachteile herkömmlicher Anordnungen vermieden werden können. Der Erfindung liegt insbesondere die Aufgabe zugrunde, eine Anordnung von Nebenaggregaten bei einer Brennkraftmaschine bereitzustellen, die wenig Bauraum beansprucht und mit geringem Aufwand eine Modifizierung einer Brennkraftmaschine für Anwendungen mit zusätzlichen Nebenaggregaten ermöglicht.

Diese Aufgaben werden durch einen Nebentrieb mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Nebentrieb einer Brennkraftmaschine bereitgestellt, aufweisend eine Welle, die mit einer Kurbelwelle der Brennkraftmaschine in Wirkverbindung steht und die zwei Wellenenden, insbesondere zwei freie Wellenenden, aufweist, die jeweils zur Verbindung mit einer leistungsgebenden und/oder leistungsnehmenden Maschine, insbesondere einer außerhalb vom Kurbelgehäuse angeordneten leistungsgebenden und/oder leistungsnehmenden Maschine, ausgebildet sind.

Mit anderen Worten weist die Welle ein erstes Wellenende auf, das so angeordnet ist, dass es mit einer ersten außerhalb vom Kurbelgehäuse angeordneten leistungsgebenden und/oder leistungsnehmenden ersten Maschine verbindbar ist. Ferner weist die Welle ein zweites Wellenende auf, das so angeordnet ist, dass es mit einer außerhalb vom Kurbelgehäuse angeordneten leistungsgebenden und/oder leistungsnehmenden zweiten Maschine verbindbar ist. Die beiden Maschinen können somit zueinander fluchtend an gegenüberliegenden Enden der Welle mit der Welle in Wirkverbindung gebracht werden. An einer in Axialrichtung von den Wellenenden versetzt angeordneten Stelle steht die Welle in Wirkverbindung mit der Brennkraftmaschine. Der Nebentrieb bildet mittels der Welle somit eine T-förmige Leistungsverzweigung aus.

Unter dem Begriff Nebentrieb wird ein Nebenantrieb und/oder ein Nebenabtrieb verstanden. Der Nebentrieb kann als Nebenabtrieb (engl. Power-Take-Off) fungieren, um ein oder mehrere Nebenaggregate anzutreiben. Hierbei ist ein Leistungsfluss über den Nebentrieb aus der Brennkraftmaschine heraus gerichtet. Der Nebentrieb kann auch als Nebenantrieb fungieren, wobei ein Leistungsfluss über den Nebentrieb zur Brennkraftmaschine hin fließt. Ein Nebentrieb im Sinne dieser Erfindung stellt somit eine Schnittstelle an der Brennkraftmaschine, z. B. am Verbrennungsmotor, dar, über die ein Nebenaggregat oder sonstiges Gerät mit der Brennkraftmaschine mechanisch wirkverbindbar ist, um z. B. von der Kurbelwelle angetrieben zu werden oder um mechanische Energie der Kurbelwelle zuzuführen.

Ein besonderer Vorzug des erfindungsgemäßen Nebentriebs liegt somit darin, dass die Welle nicht nur ein freies Ende, sondern zwei freie Enden aufweist, so dass nicht nur eine, sondern zwei leistungsgebende und/oder leistungsnehmende Maschinen über die Welle mit der Kurbelwelle der Brennkraftmaschine in Wirkverbindung bringbar sind. Dies ist besonders vorteilhaft für Kraftfahrzeuge, die eine Expansionsmaschine eines Abwärmenutzungssystems zur Umwandlung von Abwärme der Brennkraftmaschine oder eines Motorstaubremssystems in nutzbare Energie aufweisen, was nachfolgend noch detaillierter erläutert wird.

Die Welle kann vorteilhafterweise seitlich an der Brennkraftmaschine, insbesondere an einem getriebeseitigen seitlichen Endbereich der Brennkraftmaschine, angeordnet sein.

Gemäß einer besonders bevorzugten Ausführungsform weist der Nebentrieb ein Gehäuse auf, in dem die Welle gelagert ist. Gemäß einer Variante dieser Ausführungsform kann dieses Gehäuse am Kurbelgehäuse, insbesondere an einer Außenseite des Kurbelgehäuses, befestigt sein oder als Teil des Kurbelgehäuses ausgebildet sein. Das Gehäuse kann beispielweise seitlich und außerhalb am Kurbelgehäuse befestigt sein. Gemäß einer anderen Variante kann dieses Gehäuse an einem Steuergehäuse befestigt sein oder als Teil des Steuergehäuses ausgebildet sein. Mit Steuergehäuse wird ein Gehäuse bezeichnet, in dem ein in Wirkverbindung mit der Brennkraftmaschine stehender Rädertrieb angeordnet ist. Das Kurbelgehäuse ist üblicherweise zu einer Stirnseite hin offen. Das Steuergehäuse ist an der Stirnseite angeordnet und schließt so das Kurbelgehäuse an einer Stirnseite ab. Das Steuergehäuse kann das hintere Steuergehäuse sein, in dem der hintere, d. h. getriebeseitige, Rädertrieb untergebracht ist. Dieses Gehäuse kann ferner sowohl am Kurbelgehäuse als auch an dem Steuergehäuse befestigt sein. Die Welle ist somit über dieses Gehäuse am Kurbelgehäuse und/oder Steuergehäuse befestigt. Das Gehäuse wird daher nachfolgend als Zwischengehäuse bezeichnet. Diese Varianten bieten den Vorzug, dass bestehende Formen und Ausführungen des Kurbelgehäuses nicht geändert werden müssen, um die Welle anzuordnen. Stattdessen wird ein separates Zwischengehäuse außen am Kurbelgehäuse oder Steuergehäuse befestigt.

Gemäß einer ersten erfindungsgemäßen Variante ist die Welle in einem Gehäuseabschnitt des Kurbelgehäuses gelagert. Gemäß einer zweiten erfindungsgemäßen Variante ist die Welle in einem Gehäuseabschnitt des Steuergehäuses gelagert, in dem der hintere, d. h. getriebeseitige, Rädertrieb, der in Wirkverbindung mit der Brennkraftmaschine steht, gelagert ist. Diese Varianten bieten den Vorteil, dass auf ein separates Zwischengehäuse verzichtet werden kann.

Der Gehäuseabschnitt und das Zwischengehäuse können im Bereich der Wellenenden jeweils eine Öffnung aufweisen, um eine außerhalb vom und/oder am Kurbelgehäuse angeordnete Maschine an eines der Wellenenden anzuschließen.

Das Zwischengehäuse kann an einer seitlichen Wandung des Kurbelgehäuses der Brennkraftmaschine oder an der hinteren, d. h. getriebeseitigen Stirnseite des Verbrennungsmotors angeordnet sein. Die beiden seitlichen Wandungen des Kurbelgehäuses verlaufen zwischen den beiden Stirnflächen und sind in Vertikalrichtung in Richtung einer Ölwanne geführt, die an einem unteren Bereich des Kurbelgehäuses vorgesehen ist. Weiter vorzugsweise kann das Zwischengehäuse an einem getriebeseitigen seitlichen Endbereich des Kurbelgehäuses der Brennkraftmaschine angeordnet sein, insbesondere an einem getriebeseitigen Bereich der seitlichen Wandung des Kurbelgehäuses oder Steuergehäuses. Durch diese Anordnung kann die Welle beispielsweise an einen mit der Kurbelwelle in Wirkverbindung stehenden hinteren Rädertrieb der Brennkraftmaschine angeschlossen werden.

Ferner kann die Welle mittels mindestens einem Radial- und/oder mindestens einem Axiallager in dem Zwischengehäuse oder dem Gehäuseabschnitt gelagert sein. Die Radial- und/oder Axiallager nehmen die auf die Welle wirkenden Radial- und/oder Axialkräfte auf, die beispielsweise durch die mechanische Wirkverbindung der Welle mit dem Rädertrieb verursacht werden. Durch eine derartige Anordnung können die meist lebensdauerbeschränkenden Kräfte auf die Lager der Nebenaggregate verringert oder vermieden werden.

Gemäß einem weiteren möglichen Aspekt der Erfindung kann an gegenüberliegenden Stirnseiten des Zwischengehäuses oder des Gehäuseabschnitts jeweils eine Befestigungsschnittstelle zur verdrehgesicherten Befestigung eines Gehäuses der leistungsgebenden und/oder leistungsnehmenden Maschine vorgesehen sein. Jede Befestigungsschnittstelle ist somit einem Wellenende zugeordnet. Die Stirnseiten des Zwischengehäuses sind jeweils einem der freien Wellenenden zugeordnet und stehen im Wesentlichen senkrecht auf der Drehachse der Welle. Das Zwischengehäuse kann somit eine Mehrfachfunktion ausüben: Das Zwischengehäuse kann zur gelagerten Aufnahme der Welle und zur Befestigung der Maschinengehäuse der mit der Welle in Wirkverbindung stehenden Maschinen dienen sowie einen Schutz der Welle von Verschmutzung und mechanischer Beschädigung bereitstellen, sowie in der gleichzeitigen Ausführung als Steuergehäuse den hinten Rädertrieb und das Schwungrad umhausen.

Ferner kann das Zwischengehäuse oder der Gehäuseabschnitt im Bereich der Wellenenden jeweils eine Öffnung aufweisen, so dass eine außerhalb am Zwischengehäuse und/oder Gehäuseabschnitt angeordnete leistungsgebende und/oder leistungsnehmenden Maschine über eine solche Öffnung in Wirkverbindung mit einem Wellenende der Welle bringbar ist.

Erfindungsgemäß ist eines der Wellenenden mit einer Expansionsmaschine wirkverbunden, die Teil eines Abwärmenutzungssystems zur Umwandlung von Abwärme der Brennkraftmaschine oder eines Motorstaubremssystems in nutzbare Energie ist, vorzugsweise mittels eines Dampfkreislaufs. Bei einem solchen Abwärmenutzungssystem wird ein Kreislaufmedium mit Hilfe eines Dampfkreislaufs, z. B. eines ORC-Prozesses (Organic Rankine Cycle), auf ein hohes Druckniveau gebracht, in einem Verdampfer verdampft und überhitzt. Dieser Dampf wird einer Expansionsmaschine zugeführt, die die im Dampf gespeicherte Energie in nutzbare Energie umwandelt. Nach der Expansionsmaschine wird der Dampf wieder verflüssigt und einer Speisepumpe zugeführt.

Ferner kann mindestens eines der Wellenenden mit einer motorisch und/oder generatorisch betreibbaren elektrischen Maschine wirkverbunden sein, z. B. einem Motor/Generator, der mit einer 12V-, 24V-, 48V- oder Hochvolt- (z.B. 400V) Betriebsspannung betreibbar ist und an ein Bordnetz des Fahrzeugs elektrisch angeschlossen ist. Eines der freien Wellenenden kann auch frei bleiben, d. h. nicht bestückt werden.

Ferner können beide Wellenenden mit einer generatorisch und vorzugsweise motorisch betreibbaren elektrischen Maschine verbunden sein.

Besonders vorteilhaft ist eine Ausführungsform, bei der eines der Wellenenden mit einer Expansionsmaschine und das andere Wellenende mit einer motorisch und generatorisch betreibbaren elektrischen Maschine wirkverbunden ist. Ist sowohl die Expansionsmaschine als auch der Motor/Generator mit der Welle verbunden, bietet diese Anordnung den Vorzug, dass die Expansionsmaschine und der Generator sowohl untereinander als auch jeweils mit dem Verbrennungsmotor über die Welle wirkverbindbar sind, um eine wahlweise elektrische Nutzung und mechanische Nutzung der Energie der Expansionsmaschine zu ermöglichen. Ein besonderer Vorzug der Erfindung liegt somit darin, dass mit der erfindungsgemäßen Nebentriebsschnittstelle verschiedene Bestückungsvarianten realisierbar sind. So kann für Fahrzeugvarianten, die mit einem Abwärmenutzungssystem unter Verwendung eines Dampfkreislaufs ausgestattet werden sollen, ein Ende der Welle mit einer Expansionsmaschine bestückt wird, während das andere Ende mit einem Motor/Generator bestückt wird. Hierbei kann der Motor/Generator je nach Marktanforderung wahlweise als Generator oder Motor/Generator mit 12V-, 24V-, 48V-Betriebsspannung, als Motor/Generator mit Hochvolt-Betriebsspannung (z.B. 400V) oder einer anderen Betriebsspannung ausgeführt sein. Für Fahrzeugvarianten, die kein Abwärmenutzungssystem umfassen sollen, kann eines der freien Enden frei bleiben und das andere mit dem Motor/Generator bestückt werden. Für Anwendungen mit hohem Strombedarf, z. B. bei Bussen, kann auch an jedem freien Ende der Welle jeweils ein Generator oder Motor/Generator angeschlossen sein.

Im Rahmen der Erfindung kann ferner wenigstens eine Kupplung oder ein aktives oder passives Schaltelement vorgesehen sein, um die Wirkverbindung zwischen der am einen freien Ende angeschlossenen Maschine und der am anderen freien Ende angeschlossenen Maschine wahlweise herzustellen oder zu trennen und/oder um die Wirkverbindung der Welle mit dem Verbrennungsmotor wahlweise herzustellen oder zu trennen. Alternativ kann keine solche Kupplung oder Schaltelement vorgesehen sein, so dass die Welle mit dem Verbrennungsmotor fest und/oder nicht-schaltbar, insbesondere permanent, wirkverbunden ist und/oder dass die an beiden freien Ende angeschlossenen Maschinen fest und/oder nicht-schaltbar, insbesondere permanent, wirkverbunden sind.

Die Welle kann so angeordnet sein, dass ihre Drehachse parallel oder im Wesentlichen parallel zur Kurbelwellenachse verläuft. Die freien Wellenenden können zur Verbindung mit jeweils einer leistungsgebenden und/oder leistungsnehmenden Maschine jeweils ein zweckmäßig ausgeführtes Anschlusselement aufweisen. Das Anschlusselement kann beispielsweise als Verbindungsflansch, Innenverzahnung, Außenverzahnung, Kegelstumpf, Keilwellenprofil, als Zahnwellenprofil oder als jede andere Welle-Nabe-Verbindung ausgeführt sein.

Die Welle kann drehfest mit einem Zahnrad verbunden sein, wobei das Zahnrad von der Kurbelwelle der Brennkraftmaschine ausgehend über Zwischenräder antreibbar ist. Die Welle kann insbesondere über einen Rädertrieb mit der Kurbelwelle in Wirkverbindung stehen. Der Rädertrieb kann an einem getriebeseitigen Endbereich der Brennkraftmaschine angeordnet sein. Die Wirkverbindung der Welle mit dem Zahnrad und/oder dem Rädertrieb erfolgt vorzugsweise an einem Wellenabschnitt, der beabstandet von den freien Enden der Welle ist.

Dieser Rädertrieb der Brennkraftmaschine kann ferner mit einer Lenkhilfepumpe, einem weiteren Nebenabtrieb (engl. Power-Take-Off), einer Ölpumpe, einer Kraftstoff-Hochdruckpumpe und einem Nockenwellenantrieb in Wirkverbindung stehen.

Gemäß einer weiteren Variante ist die Welle auf einer Kaltseite der Brennkraftmaschine angeordnet. Dies ist besonders vorteilhaft, wenn an einem freien Wellenende der Welle die Expansionsmaschine angeschlossen ist, da WHR-Kreisläufe üblicherweise mit einem entzündlichen Fluid, z. B. Ethanol, arbeiten, so dass bei einem Leck dieses Fluid nicht unmittelbar auf die Heißseite des Motors gelangt. Brennkraftmaschinen haben bekanntermaßen eine Heißseite, die im Vergleich zur Kaltseite eine höhere Temperatur im Betrieb der Brennkraftmaschine aufweist. Die Heißseite der Brennkraftmaschine ist beispielsweise diejenige Seite der Brennkraftmaschine, an der ein Abgaskrümmer angeordnet ist. Auf der Heißseite kann auch der Abgasturbolader angeordnet sein. An der Kaltseite sind bei einem Nutzfahrzeug typischerweise die Ladeluftleitung und/oder das Motorsteuergerät angeordnet.

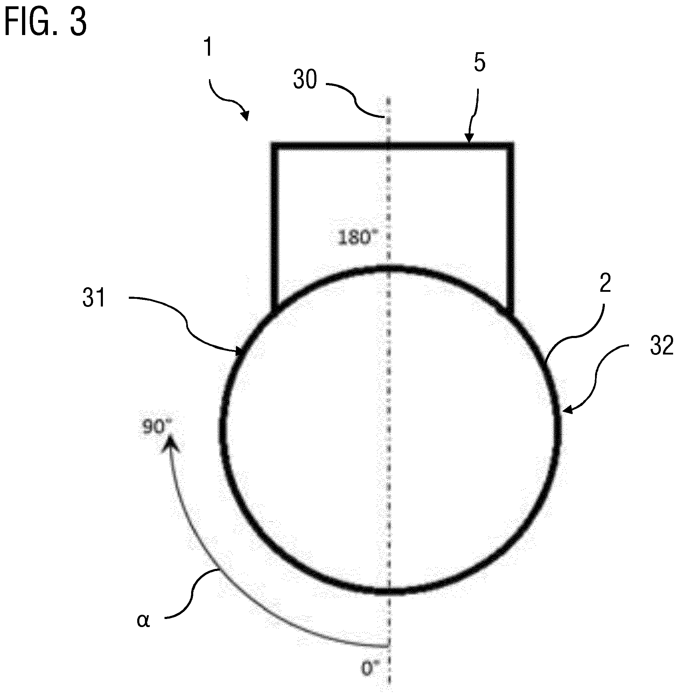

Aus bauraumtechnischen Gründen, insbesondere bei einem Nutzfahrzeug, ist es besonders vorteilhaft, die Welle und/oder das Zwischengehäuse in einem bestimmten Winkelbereich am Kurbelgehäuse anzuordnen, wobei ein Winkel von einer hinteren Stirnseite des Kurbelgehäuses aus in Richtung der Brennkraftmaschine gesehen und ausgehend von einem Winkel von 0° an der Unterseite des Kurbelgehäuses im Uhrzeigersinn nach oben bestimmt ist. Mit anderen Worten ist der Winkelbereich, dargestellt in Figur 3, so beschrieben, als wenn man auf den Verbrennungsmotor von hinten (getriebeseitig) schaut. Der Winkel ist somit in Bezug auf eine zur Kurbelwelle parallele Vertikalebene festgelegt, so dass der Winkelbereich von 0° bis 360° einen senkrechten Kreis zu dieser Vertikalebene aufspannt. Ein Winkel von 0° entspricht somit einer Anordnung unten und mittig am Kurbelgehäuse; ein Winkel von 180° entspricht einer Anordnung oben mittig am Kurbelgehäuse; und ein Winkel von 90° oder 270° bzw. -90° entspricht einer Anordnung an der seitlichen Wandung des Kurbelgehäuses.

Eine vorteilhafte Anordnungsstelle des Zwischengehäuses und/oder der Welle liegt an der seitlichen Wandung des Kurbelgehäuses in einem Winkelbereich von 110° bis 160° oder von 200° bis 250°, da hier der Bauraum bei einem Nutzfahrzeugmotor nicht von einem Fahrzeugrahmen oder der Fahrzeugachse beansprucht wird und die Anordnung auch nicht die Bodenfreiheit einschränkt.

Die Erfindung betrifft ferner ein Kraftfahrzeug, insbesondere ein Nutzfahrzeug, mit einer Anordnung von Nebenaggregaten wie in diesem Dokument beschrieben.

Weitere Einzelheiten und Vorteile der Erfindung werden im Folgenden unter Bezug auf die beigefügten Zeichnungen beschrieben. Es zeigen:
- Figur 1: eine perspektivische Ansicht einer aus dem Stand der Technik bekannten Anordnung von Nebenaggregaten an einem Verbrennungsmotors eines Nutzfahrzeugs;
- Figur 2: eine perspektivische Ansicht einer Anordnung von Nebenaggregaten an einem Verbrennungsmotor eines Nutzfahrzeugs mit einem Nebentrieb gemäß einem Ausführungsbeispiel der Erfindung;
- Figur 3: eine hintere Frontansicht auf dem Verbrennungsmotor zur Illustration von Winkelbereichen;
- Figur 4: eine Detailansicht eines Nebentriebs gemäß einer Ausführungsform der Erfindung; und
- Figuren 5A und 5B: Detailansichten eines Nebentriebs gemäß einer weiteren Ausführungsform der Erfindung.

Gleiche oder funktional äquivalente Elemente sind in allen Figuren mit denselben Bezugszeichen bezeichnet.

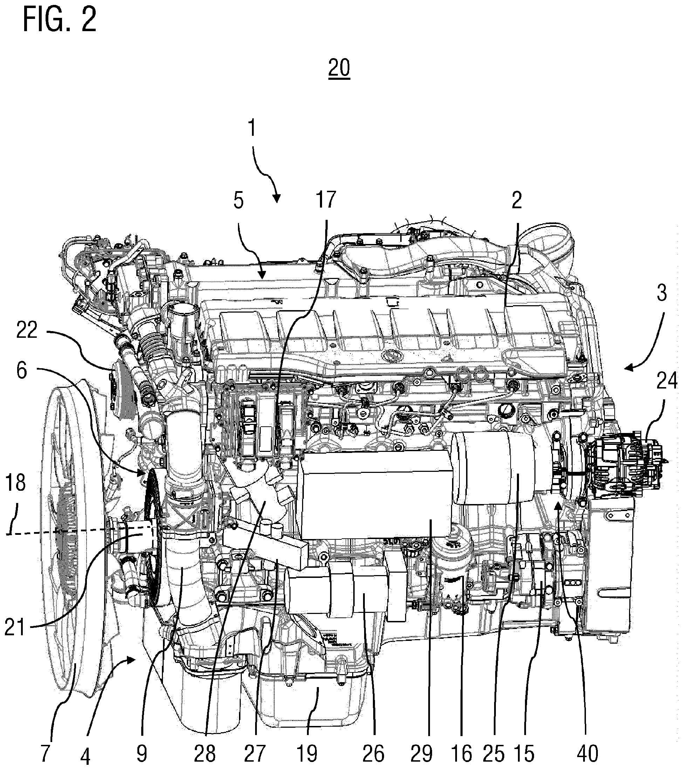

Figur 2 zeigt eine perspektivische Ansicht einer Anordnung 20 von Nebenaggregaten an einem Verbrennungsmotor 1 eines Nutzfahrzeugs gemäß einem Ausführungsbeispiel der Erfindung. Die Verbrennungsmotor 1 ist als Dieselbrennkraftmaschine ausgeführt. Die Oberseite des Verbrennungsmotors 1 ist wie in Figur 1 mit dem Bezugszeichen 5, die vordere Stirnseite mit dem Bezugszeichen 4 und die hintere, getriebeseitige Stirnseite mit dem Bezugszeichen 3 bezeichnet. Die gezeigte Anordnung 20 der Nebenaggregate ist riemenantriebsfrei, d. h. ohne Riemenantrieb, ausgeführt. Auch der vordere Rädertrieb ist im Vergleich zur der in Figur 1 gezeigten Anordnung weggefallen.

Beispielhaft ausgehend von der in Figur 1 dargestellten bekannten Anordnung wird der Entfall des Riementriebs dadurch ermöglicht, dass die bisher vom Riementrieb angetriebenen Komponenten elektrifiziert werden oder in den hinteren Rädertrieb verlagert werden. Der Generator 24 wird nunmehr vom hinteren Rädertrieb angetrieben, wobei der Generator 24 im Vergleich zu dem Generator 14 der Figur 1 auch als Motor/Generator mit 12V-, 24V-, 48V- oder Hochvolt- (z.B. 400V) Betriebsspannung ausgeführt sein kann. Der Generator 24 ist daher nicht nur generatorisch, sondern auch motorisch betreibbar und hierzu von einem elektrischen Energiespeicher eines elektrischen Bordnetzes (jeweils nicht dargestellt) mit elektrischer Energie für den motorischen Betrieb versorgbar. Der hintere Rädertrieb, der in an sich bekannter Weise ausgeführt sein kann, befindet sich im Bereich der hinteren Stirnseite 3 und ist vom Steuergehäuse 52 umhaust und daher in der Darstellung der Figur 2 nicht sichtbar.

Die Wasserpumpe 22 ist als elektrifizierte Komponente mit 48V-Betriebsspannung ausgelegt und motorfest an der Motorvorderseite 4 angeordnet. Der Kältemittelkompressor (in Figur 2 nicht dargestellt) ist ebenfalls als elektrifizierte Komponente mit 48V-Betriebsspannung ausgelegt und dadurch rahmenfest verbaubar. Der am Fahrzeugrahmen verbaute Kältemittelkompressor ist in Figur 2 nicht dargestellt. Die Lenkhilfepumpe (in Figur 2 nicht dargestellt) ist ebenfalls als elektrifizierte Komponente mit 48V-Betriebsspannung ausgelegt und dadurch rahmenfest verbaubar. Die am Fahrzeugrahmen verbaute Lenkhilfepumpe ist in Figur 2 nicht dargestellt.

Beispielhaft ausgehend von der in Figur 1 dargestellten bekannten Anordnung wird der Entfall des vorderen Rädertriebs in der in Figur 2 gezeigten Ausführungsvariante dadurch ermöglicht, dass die bisher vom vorderen Rädertrieb angetriebenen Komponenten in den hinteren Rädertrieb verlagert werden - mit Ausnahme des Lüfters 7, der koaxial und drehfest zur Kurbelwelle auf einem Kurbelwellenstumpf 21 angeordnet ist. Die gestrichelte Linie 18 stellt die Mittelachse der Kurbelwelle dar. Die Hochdruck-Kraftstoffpumpe 15 und die Ölpumpe sind mechanisch von dem hinteren Rädertrieb angetrieben. Die Ölpumpe kann zusätzlich elektrisch angetrieben sein und somit teilweise elektrifiziert sein. Der hintere Rädertrieb treibt ferner in an sich bekannter Weise einen Nockenwellenantrieb an (jeweils nicht dargestellt). Der hintere Rädertrieb weist ferner einen Nebenabtrieb (engl. Power-Take-Off) (nicht dargestellt) auf, zum Antrieb von z. B. einer Hydraulikpumpe für Aufbauten des Nutzfahrzeugs.

Eine Besonderheit der Anordnung 20 liegt darin, dass der Kolbenluftpresser aus Figur 1 durch eine Verdichtereinrichtung zur Drucklufterzeugung eines Druckluftsystems ersetzt wurde, bei der mindestens ein Zylinder der Brennkraftmaschine ein im Zylinderkopf angeordnetes steuerbares Ventil aufweist, über das in einem geöffnetem Zustand des Ventils eine Verbindung von dem Brennraum des mindestens einen Zylinders zu einem Druckluftsystem herstellbar und einem Druckluftspeicher des Druckluftsystems komprimiertes Gas aus dem Brennraum zuführbar ist. Eine Verdichtereinrichtung, die zur Drucklufterzeugung komprimierte Luft aus einem Zylinder der Brennkraftmaschine gezielt entnimmt, ist an sich aus dem Stand der Technik bekannt und daher an dieser Stelle nicht weiter beschrieben. Beispielhaft wird auf die Druckschriften DE 199 02 052 C2, DE 197 35 822 C1, DE 101 35 363 A1, DE 43 09 860 C1 oder DE 31 18 269 A1 verwiesen, die gattungsgemäße Verdichtereinrichtungen beschreiben.

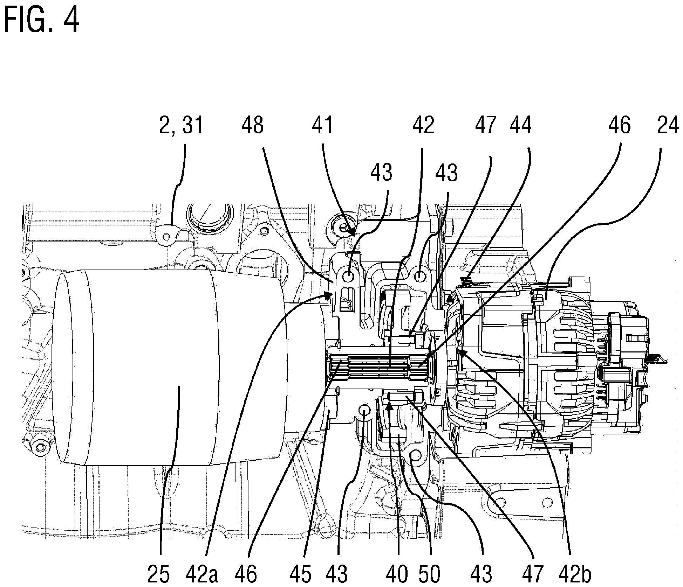

An der dadurch freigewordenen Nebentriebsschnittstelle ist an der Brennkraftmaschine angeordnete Welle 42 als Teil eines Nebentriebs 40 vorgesehen. An der Welle sind ein 48V-Motor/Generator 24 und eine Expansionsmaschine 25 angeordnet, was nachfolgend noch detaillierter in Zusammenhang mit der Beschreibung zu Figur 4 beschrieben wird.

Die Ansicht der Figur 2 zeigt die Kaltseite 31 des Verbrennungsmotors 1, mit dem Motorsteuergerät 17, der Ladeluftführung 9, einem Kraftstoffmodul 16 und dem Nebentrieb 40, an dem beispielhaft ein Motor/Generator 24 und eine Expansionsmaschine 25 angeordnet sind. In dem Kraftstoffmodul 16 sind verschiedene Komponenten zur Unterstützung der Kraftstoffversorgung, wie beispielsweise ein Kraftstofffilter und Druckregler, integriert. Auf der Kaltseite sind neben der Expansionsmaschine 25 weitere an sich bekannte Komponenten eines Dampfkreislaufs angeordnet, nämlich eine Speisepumpe 26, ein Verteilerventil 27, ein Bypassventil 28 sowie ein Kondensator 29, die jeweils am Kurbelgehäuse 2 befestigt sind.

Figur 3 zeigt eine hintere Frontansicht auf dem Verbrennungsmotor zur Illustration von Winkelbereichen, an denen die Nebenaggregate angeordnet sind. Zur Festlegung von einem Winkelbereich wird ein Winkel α von einer hinteren Stirnseite (Getriebeseite) des Kurbelgehäuses 2 aus in Richtung der Brennkraftmaschine 1 gesehen und ausgehend von einem Winkel von 0° an der Unterseite des Kurbelgehäuses im Uhrzeigersinn nach oben bestimmt. Die nachfolgenden optionalen Winkelbereiche der Komponentenanordnung sind daher so beschrieben, als wenn man auf den Verbrennungsmotor von hinten (getriebeseitig) schaut. Der Winkel ist somit in Bezug auf eine zur Kurbelwelle parallele und diese enthaltende Vertikalebene 30 festgelegt, so dass der Winkelbereich von 0° bis 360° einen senkrechten Kreis zu dieser Vertikalebene aufspannt. Im gezeigten Beispiel ist die Seite 31 die Kaltseite und die Seite 32 die Heißseite des Verbrennungsmotors.

Der Nebentrieb 40 (mit den beispielhaft angebauten Maschinen Motor/Generator 24 und Expansionsmaschine 25) ist an der seitlichen Wandung des Kurbelgehäuses auf der Kaltseite 31 in einem Winkelbereich von 110° bis 160° angeordnet. Die Kraftstoffpumpe 15 ist auf der Kaltseite 31 in einem Winkelbereich von 60° bis 120° angeordnet. Die Ölpumpe ist im unteren Bereich des Kurbelgehäuses in einem Winkelbereich von -90° bis 90° angeordnet. Wären Kalt- und Heißseite vertauscht, wären der Motor/Generator entsprechend in einem Winkelbereich von 200° bis 250° und die Kraftstoffpumpe in einem Bereich von 240° bis 300° seitlich am Kurbelgehäuse angeordnet.

Figur 4 zeigt eine Detailansicht eines Nebentriebs 40 gemäß einer Ausführungsform der Erfindung, wobei nur der Nebentrieb 40 in einer Schnittansicht dargestellt ist. Vorstehend wurde bereits erwähnt, dass eine Nebentriebsschnittstelle, an der bei einem aus dem Stand der Technik bekannten Verbrennungsmotor (siehe Figur 1) ein Luftverdichter angeordnet ist, nunmehr genutzt wird, um eine Welle 42 anzuordnen, die zwei freie Wellenenden 42a, 42b aufweist, die jeweils zur Verbindung mit einer leistungsgebenden und/oder leistungsnehmenden Maschine 24, 25 ausgebildet sind. Die Drehachse der Welle 42 verläuft parallel zur Kurbelwellendrehachse 18.

Die freien Wellenenden 42a, 42b können zur Verbindung mit jeweils einer leistungsgebenden und/oder leistungsnehmenden Maschine 24, 25 beispielsweise einen Verbindungsflansch, eine Innenverzahnung, eine Außenverzahnung, einen Kegelstumpf, ein Keilwellenprofil, ein Zahnwellen-profil oder vergleichbare Schnittstellen zur Welle-Nabe-Verbindung aufweisen. Die Welle 42 ist im gezeigten Beispiel als innenverzahnte Welle ausgeführt, so dass die leistungsgebenden und/oder leistungsnehmenden Maschinen 24, 25 mit einer Außenverzahnung 46 mit der Welle 42 in Wirkverbindung stehen.

Die Einspeisung und/ oder Abnahme der Leistung der Welle 42 erfolgt über den hinteren Rädertrieb, wobei die Wirkverbindung zur Kurbelwelle 18 über eine seitliche Öffnung am Kurbelgehäuse 2 erfolgt. Hierbei ist die Welle 42 drehfest mit einem Zahnrad 50 des hinteren Rädertriebs verbunden, wobei das Zahnrad 50 von der Kurbelwelle der Brennkraftmaschine 1 ausgehend über Zwischenräder des hinteren Rädertriebs antreibbar ist. Das Zahnrad 50 ist mit Befestigungselementen 47, z. B. Schrauben, an der Welle 42 gesichert.

Am Kurbelgehäuse befindet sich ein Zwischengehäuse 41, das über der seitlichen Öffnung liegt und an der seitlichen Wandung des Kurbelgehäuses 2 außen am Kurbelgehäuse befestigt ist. Das Zwischengehäuse 41 ist in einem Winkelbereich von 110° bis 160° auf der Kaltseite des Verbrennungsmotors befestigt, wie vorstehend für den Motor/Generator 25 beschrieben. Das Zwischengehäuse 41 ist mittels Befestigungselementen 43, beispielsweise Schrauben, am Kurbelgehäuse befestigt.

Die Welle 42 ist in dem Zwischengehäuse 41 mittels Radial- und Axiallager gelagert. An gegenüberliegenden Stirnseiten 48 des Zwischengehäuses 41 sind Befestigungsflansche 44, 45 zur verdrehgesicherten Befestigung der Gehäuse der leistungsgebenden und/oder leistungsnehmenden Maschinen 24, 25 vorgesehen.

Das getriebeseitige Wellenende 42b der Welle 42 ist mit dem Motor/Generator 24 verbunden. Das gegenüberliegende Wellenende 42a der Welle ist mit einer Expansionsmaschine 25 verbunden. Selbstverständlich kann diese Anordnung auch vertauscht sein, so dass die Expansionsmaschine 25 am getriebeseitigen Wellenende 42b angeordnet wäre. Die Expansionsmaschine 25 ist Teil eines Abwärmenutzungssystems zur Umwandlung von Abwärme der Brennkraftmaschine in nutzbare Energie mittels eines Dampfkreislaufs, der ferner die Speisepumpe 26, das Verteilerventil 27, das Bypassventil 28 und den Kondensator 29 umfasst, wie vorstehend beschrieben.

Die Expansionsmaschine 25 und der Motor/Generator 24 stehen sowohl untereinander als auch mit der Kurbelwelle des Verbrennungsmotors 1 über den hinteren Rädertrieb in Wirkverbindung.

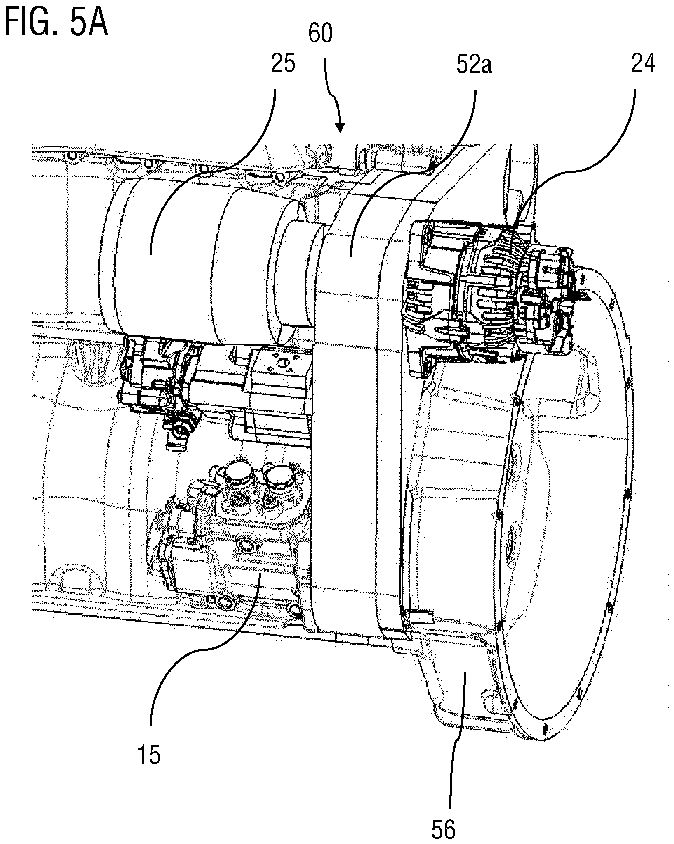

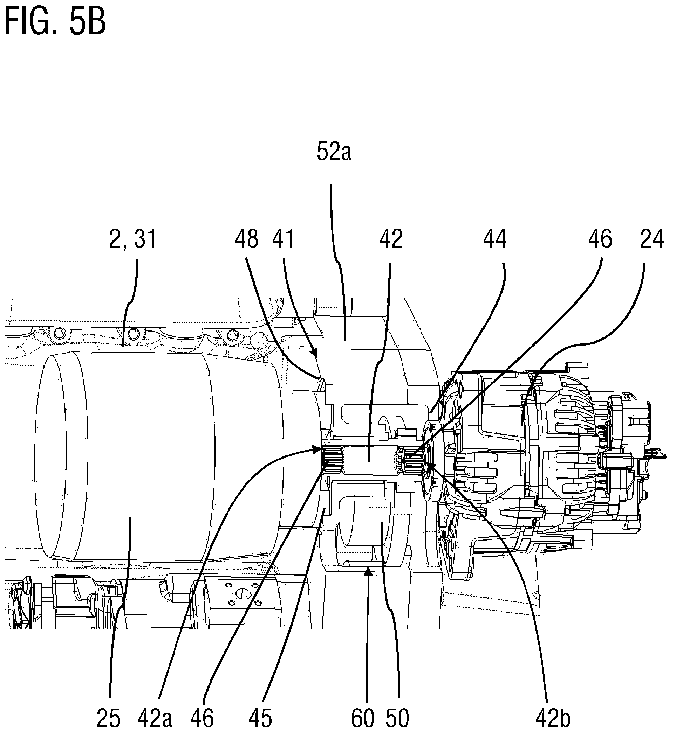

Die Figuren 5A und 5B zeigen Detailansichten eines Nebentriebs 60 gemäß einer weiteren Ausführungsform der Erfindung. Figur 5A zeigt eine perspektivische Detailansicht eines seitlichen hinteren Endbereichs der Brennkraftmaschine. Die Besonderheit dieser Ausführungsform liegt darin, dass die Welle 42 des Nebentriebs 60 in einem Gehäuseabschnitt des hinteren Steuergehäuses 52a gelagert ist. Hierzu ist das hintere Steuergehäuse 52a, das auch den hinteren Rädertrieb umhaust, im Vergleich zu dem in Figur 2 dargestellten Steuergehäuse 52 höher ausgeführt, so dass die Welle 42 an einem oberen äußeren Gehäuseabschnitt des Steuergehäuses 52a angeordnet werden kann. Das Schwungradgehäuse ist mit dem Bezugszeichen 56 bezeichnet.

Figur 5B zeigt den Nebentrieb 60 in einer Schnittansicht. Vorstehend wurde bereits erwähnt, dass das Zwischengehäuse 41 auch ein Teil des hinteren Steuergehäuses 52a oder das Steuergehäuse selbst sein kann. Vorliegend ist das Zwischengehäuse 41, in dem die Welle 42 gelagert ist, als Teil des Steuergehäuses 52a ausgeführt. Somit bilden die gelagerte Welle 42 und das darauf befestigte Zahnrad 50 einen Teil des hinteren Rädertriebs. Das Zwischengehäuse 41 ist ähnlich wie das Zwischengehäuse in Figur 2 ausgeführt. Insbesondere entsprechen Komponenten mit gleichen Bezugszeichen den Komponenten der Figur 2 und werden nicht gesondert beschrieben. Das Zahnrad 50 ist über Schrauben an der Welle 42 gesichert.

### Bezugszeichenliste

- 1: Brennkraftmaschine, insbesondere Verbrennungsmotor
- 2: Kurbelgehäuse
- 3: Getriebeseite des Verbrennungsmotors
- 4: Vordere Stirnseite des Verbrennungsmotors
- 5: Oberseite des Verbrennungsmotors
- 6: Riementrieb
- 6a: Riemenscheibe
- 6b: Riemen
- 7: Lüfter
- 9: Ladeluftführung
- 10: Antriebsanordnung
- 11: Generator
- 12: Wasserpumpe
- 13: Kältemittelkompressor
- 14: Luftverdichter
- 15: Kraftstoff-Hochdruckpumpe
- 16: Kraftstoffservicemodul
- 17: Motorsteuergerät
- 18: Mittellinie der Kurbelwelle
- 19: Ölwanne
- 20: Antriebsanordnung
- 21: Flansch
- 22: Wasserpumpe (elektrifiziert)
- 24: Motor/Generator 12V, 24V, 48V oder Hochvolt (z.B. 400V)
- 25: Expander
- 26: Speisepumpe
- 27: Verteilerventil
- 28: Bypassventil
- 29: Kondensator
- 30: Vertikalebene
- 31: Kaltseite des Motors
- 32: Heißseite des Motors
- 40: Nebentrieb
- 41: Zwischengehäuse
- 42: Innenverzahnte Welle
- 42a: Erstes Ende
- 42b: Zweites Ende
- 43: Befestigungselement
- 44: Befestigungsflansch
- 45: Befestigungsflansch
- 46: Verzahnung zur Welle-Nabe-Verbindung
- 47: Befestigungselement
- 48: Stirnseite
- 50: Zahnrad
- 51: Steuergehäuse vorne
- 52: Steuergehäuse hinten
- 52a: Steuergehäuse hinten
- 56: Schwungradgehäuse
- 60: Nebentrieb

## Patentansprüche

1. Nebentrieb (40; 60) einer Brennkraftmaschine (1), aufweisend eine Welle (42), die mit einer Kurbelwelle (18) der Brennkraftmaschine (1) in Wirkverbindung steht und die zwei Wellenenden (42a, 42b) aufweist, die jeweils zur Verbindung mit einer außerhalb vom Kurbelgehäuse angeordneten Maschine (24, 25) ausgebildet sind;
**dadurch gekennzeichnet, dass** die Welle in einem Gehäuseabschnitt
a) des Kurbelgehäuses gelagert ist; oder
b) eines Steuergehäuses, in dem ein hinterer Rädertrieb, der in Wirkverbindung mit der Brennkraftmaschine steht, gelagert ist.

2. Nebentrieb (40) nach Anspruch 1, **dadurch gekennzeichnet, dass** an gegenüberliegenden Stirnseiten (48) des Gehäuseabschnitts jeweils eine Befestigungsschnittstelle (44, 45) zur verdrehgesicherten Befestigung eines Gehäuses der Maschine (24, 25) vorgesehen ist.

3. Nebentrieb (40) nach einem der vorhergehenden Ansprüche, **dadurch gekennzeichnet,**
a) **dass** eines (42a) der beiden Wellenenden mit einer Expansionsmaschine (25) verbunden ist; und/oder
b) **dass** eines (42b) der beiden Wellenenden mit einer motorisch und generatorisch betreibbaren elektrischen Maschine (24) verbunden ist; und/oder
c) **dass** beide Wellenenden (42a, 42b) jeweils mit einer generatorisch und vorzugsweise motorisch betreibbaren elektrischen Maschine (24) verbunden sind.

4. Nebentrieb (40) nach Anspruch 3a, **dadurch gekennzeichnet, dass** die Expansionsmaschine (25) ein Teil eines Abwärmenutzungssystems zur Umwandlung von Abwärme der Brennkraftmaschine oder eines Motorstaubremssystems in nutzbare Energie ist.

5. Nebentrieb (40) nach einem der vorhergehenden Ansprüche, **dadurch gekennzeichnet, dass** die Welle (42) auf einer Kaltseite (31) der Brennkraftmaschine (1) angeordnet ist.

6. Nebentrieb (40) nach einem der vorhergehenden Ansprüche, **dadurch gekennzeichnet, dass**, von einer Stirnseite der Brennkraftmaschine (1) aus in Richtung der Brennkraftmaschine (1) gesehen und ausgehend von einem Winkel von 0° an der Unterseite des Kurbelgehäuses im Uhrzeigersinn nach oben, die Welle (42) in einem Winkelbereich von 110° bis 160° oder von 200° bis 250° angeordnet ist.

7. Nebentrieb (40) nach einem der vorhergehenden Ansprüche, **dadurch gekennzeichnet, dass** eine Drehachse der Welle (42) parallel zur Kurbelwellenachse (18) der Brennkraftmaschine (1) verläuft.

8. Nebentrieb (40) nach einem der vorhergehenden Ansprüche, **dadurch gekennzeichnet, dass** die freien Wellenenden (42a, 42b) zur Verbindung mit jeweils einer Maschine (24, 25) jeweils eines der folgenden Anschlusselemente aufweist: einen Verbindungsflansch, eine Innenverzahnung, eine Außenverzahnung, einen Kegelstumpf, ein Keilwellenprofil, ein Zahnwellenprofil oder eine andere Welle-Nabe-Verbindung.

9. Nebentrieb (40) nach einem der vorhergehenden Ansprüche, **dadurch gekennzeichnet,** die Welle (42) drehfest mit einem Zahnrad (50) verbunden ist, wobei das Zahnrad (50) von der Kurbelwelle der Brennkraftmaschine (1) ausgehend über Zwischenräder antreibbar ist.

10. Nebentrieb (40) nach einem der vorhergehenden Ansprüche, **dadurch gekennzeichnet, dass** die Welle (42) über einen Rädertrieb mit der Kurbelwelle in Wirkverbindung steht,
a) wobei der Rädertrieb an einem getriebeseitigen Endbereich der Brennkraftmaschine (1) angeordnet ist; und/oder
b) wobei der Rädertrieb mit zumindest einer der folgenden Einrichtungen in Wirkverbindung steht: einer Lenkhilfepumpe, einem Nockenwellenantrieb, einer Kraftstoff-Hochdruckpumpe, einem weiteren Nebentrieb (engl. Power-Take-Off) und/oder einer Ölpumpe.

11. Kraftfahrzeug, insbesondere Nutzfahrzeug, mit einem Nebentrieb (40) nach einem der vorhergehenden Ansprüche.

## Claims

1. An auxiliary drive (40; 60) of an internal combustion engine (1), having a shaft (42) which is operatively connected to a crankshaft (18) of the internal combustion engine (1) and which has two shaft ends (42a, 42b) which are configured in each case for connection to a machine (24, 25) arranged outside the crankcase;
**characterized in that** the shaft is mounted in a case section of
a) the crankcase; or
b) a control case in which a rear gear drive is mounted which is operatively connected to the internal combustion engine.

2. The auxiliary drive (40) according to Claim 1, **characterized in that** on opposite face sides (48) of the case section, there is provided in each case one fastening interface (44, 45) for the rotationally secured fastening of a case of the machine (24, 25).

3. The auxiliary drive (40) according to one of the preceding claims, **characterized in that**
a) one (42a) of the two shaft ends is connected to an expansion machine (25); and/or
b) one (42b) of the two shaft ends is connected to an electric machine (24) which is operable as a motor and as a generator; and/or
c) the two shaft ends (42a, 42b) are each connected to an electric machine (24) which is operable as a generator and preferably also as a motor.

4. The auxiliary drive (40) according to Claim 3a, **characterized in that** the expansion machine (25) is part of a waste heat recovery system for converting waste heat of the internal combustion engine or of an engine braking system into utilizable energy.

5. The auxiliary drive (40) according to one of the preceding claims, **characterized in that** the shaft (42) is arranged on a cold side (31) of the internal combustion engine (1).

6. The auxiliary drive (40) according to one of the preceding claims, **characterized in that,** as viewed in the direction of the internal combustion engine (1) from a face side of the internal combustion engine (1) and proceeding upward clockwise from an angle of 0° at the bottom side of the crankcase, the shaft (42) is arranged in an angle range from 110° to 160° or from 200° to 250°.

7. The auxiliary drive (40) according to one of the preceding claims, **characterized in that** an axis of rotation of the shaft (42) runs parallel to the crankshaft axis (18) of the internal combustion engine (1).

8. The auxiliary drive (40) according to one of the preceding claims, **characterized in that** the free shaft ends (42a, 42b) have, for the connection to in each case one machine (24, 25), in each case one of the following connection elements: a connecting flange, an internal toothing, an external toothing, a frustum, a splined shaft profile, a toothed shaft profile or some other shaft-hub connection.

9. The auxiliary drive (40) according to one of the preceding claims, **characterized in that** the shaft (42) is connected rotationally conjointly to a gearwheel (50), wherein the gearwheel (50) can be driven by the crankshaft of the internal combustion engine (1) via intermediate gears.

10. The auxiliary drive (40) according to one of the preceding claims, **characterized in that** the shaft (42) is operatively connected via a gear drive to the crankshaft,
a) wherein the gear drive is arranged on a gearbox-side end region of the internal combustion engine (1); and/or
b) wherein the gear drive is operatively connected to at least one of the following devices: a steering assistance pump, a camshaft drive input, a high-pressure fuel pump, a further auxiliary drive (power take-off) and/or an oil pump.

11. A motor vehicle, in particular utility vehicle, having an auxiliary drive (40) according to one of the preceding claims.

## Revendications

1. Entraînement auxiliaire (40 ; 60) d'un moteur à combustion interne (1), ledit entraînement auxiliaire comportant un arbre (42) qui est relié fonctionnellement à un vilebrequin (18) du moteur à combustion interne (1) et qui comporte deux bouts d'arbre (42a, 42b) qui sont conçus chacun pour être relié à une machine (24, 25) disposée à l'extérieur du boîtier de vilebrequin ;
**caractérisé en ce que** l'arbre est monté dans une portion de boîtier
a) du boîtier de vilebrequin ; ou
b) d'un boîtier de commande dans, lequel un entraînement par engrenages arrière est monté qui est relié fonctionnellement au moteur à combustion interne (1).

2. Entraînement auxiliaire (40) selon la revendication 1, **caractérisé en ce qu'**une interface de fixation (44, 45) destinée à fixer solidairement en rotation un boîtier de la machine (24, 25) est prévue sur des faces frontales opposées (48) de la portion de boîtier.

3. Entraînement auxiliaire (40) selon l'une des revendications précédentes, **caractérisé en ce que**
a) l'un (42a) des deux bouts d'arbre est relié à une machine de détente (25) ; et/ou
b) l'un (42b) des deux bouts d'arbre est relié à une machine électrique (24) pouvant fonctionner en moteur et en générateur ; et/ou
c) les deux bouts d'arbre sont chacun reliés à une machine électrique (24) pouvant fonctionner en générateur et, de préférence, en moteur.

4. Entraînement auxiliaire (40) selon la revendication 3a, **caractérisé en ce que** la machine de détente (25) faisant partie d'un système de récupération de chaleur perdue pour convertir la chaleur perdue du moteur à combustion interne (1) ou d'un système de freinage de moteur pneumatique en énergie utilisable.

5. Entraînement auxiliaire (40) selon l'une des revendications précédentes, **caractérisé en ce que** l'arbre (42) est disposé sur un côté froid (31) du moteur à combustion interne (1).

6. Entraînement auxiliaire (40) selon l'une des revendications précédentes, **caractérisé en ce que,** lorsque l'on regarde depuis une face frontale du moteur à combustion interne (1) en direction du moteur à combustion interne (1) et depuis un angle de 0° sur la face inférieure du boîtier de vilebrequin vers le haut dans le sens horaire, l'arbre (42) est disposé dans une plage angulaire de 110° à 160° ou de 200° à 250°.

7. Entraînement auxiliaire (40) selon l'une des revendications précédentes, **caractérisé en ce qu'**un axe de rotation de l'arbre (42) s'étend parallèlement à l'axe de vilebrequin (18) du moteur à combustion interne (1).

8. Entraînement auxiliaire (40) selon l'une des revendications précédentes, **caractérisé en ce que** les bouts d'arbre libres (42a, 42b) destinés à être reliés à une machine respective (24, 25) comportent chacun l'un des éléments de raccordement suivants : une bride, une denture intérieure, une denture extérieure, un tronc de cône, un profil d'arbre cannelé, un profil d'arbre denté ou une autre liaison arbre-moyeu.

9. Entraînement auxiliaire (40) selon l'une des revendications précédentes, **caractérisé en ce que** l'arbre (42) est relié solidairement en rotation à une roue dentée (50), la roue dentée (50) pouvant être entraînée par le vilebrequin du moteur à combustion interne (1) par le biais de roues intermédiaires.

10. Entraînement auxiliaire (40) selon l'une des revendications précédentes, **caractérisé en ce que** l'arbre (42) est relié fonctionnellement au vilebrequin par le biais d'un entraînement par engrenages,
a) l'entraînement par engrenages étant disposé au niveau d'une région d'extrémité côté transmission du moteur à combustion interne (1) ; et/ou
b) l'entraînement par engrenages étant relié fonctionnellement à l'un au moins des dispositifs suivants : une pompe de direction assistée, un entraînement d'arbre à cames, une pompe à carburant à haute pression, un autre entraînement auxiliaire (en anglais Power-Take-Off) et/ou une pompe à huile.

11. Véhicule automobile, notamment véhicule utilitaire, comprenant un entraînement auxiliaire (40) selon l'une des revendications précédentes.
